# EUROPEAN PATENT SPECIFICATION

(11) **EP 1 961 788 B1**
(45) Date of publication and mention of the grant of the patent: **18.11.2009**
(21) Application number: 08250605.6
(22) Date of filing: 21.02.2008
(51) Int. Cl.: C08L 83/04, D06M 15/643

(54) **Liquid addition-curable silicone composition for fiber-reinforced compositie material, fiber reinforced silicone composite material and method of producing same**
Durch Addition härtbare flüssige Silikon-Zusammensetzung für faserverstärktes Verbundmaterial, faserverstärktes Silikon-Verbundmaterial und Herstellungsverfahren dafür
Composition liquide à la silicone durcissable par addition pour matériau composite renforcé par fibres, matériau composite à la silicone renforcé par fibres et son procédé de fabrication

(30) Priority: 22.02.2007 JP 2007041645
(43) Date of publication of application: 27.08.2008
(73) Proprietor: Shin-Etsu Chemical Co., Ltd., Tokyo (JP)
(72) Inventor: Aoki, Yoshitaka, c/o Shin-Etsu Chemical Co. Ltd., Annaka-shi, Gunma-ken (JP)
(74) Representative: Hallybone, Huw George

(56) References cited:
- EP-A- 0 728 825
- EP-A- 1 013 817
- EP-A- 1 491 678

## Description

### BACKGROUND OF THE INVENTION

### 1. Field of the Invention

The present invention relates to a liquid addition-curable silicone composition for forming a fiber-reinforced composite material that exhibits excellent heat resistance and strength. Specifically, the present invention relates to a liquid addition-curable silicone composition for a fiber-reinforced composite material which, upon mixing with a reinforcing fiber and subsequent curing, yields a molded item that can be used favorably for aircraft members, spacecraft members, artificial satellite members, automobile members and the like, and also relates to a fiber-reinforced silicone composite material obtained by curing the composition, and a method of producing the silicone composite material.

### 2. Description of the Prior Art

Fiber-reinforced composite materials comprising a reinforcing fiber such as a glass fiber or carbon fiber, and a matrix resin such as an epoxy resin or a phenolic resin are lightweight and yet exhibit excellent mechanical properties, and they are therefore widely used in applications including the sports, aerospace, shipping and automotive industries.

In recent years, as the applications of these fiber-reinforced composite materials have expanded, a variety of specific properties are now being demanded of fiber-reinforced composite materials, and one of these demands is for improved heat resistance. The heat resistance of a fiber-reinforced composite material is dependent on the heat resistance of the matrix resin, and known methods of improving the heat resistance include using a polyfunctional epoxy resin (see patent reference 1), or using a polyamic acid oligomer (see patent reference 2). Furthermore, it is also known that the heat resistance can be improved for a composite comprising a siloxane polymer and an aramid fiber by using a polycondensation process to generate cross-linking within a silicone with a comparatively low polymerization degree (see patent reference 3). Moreover, a composite material with a high modulus retention, obtained by combining an organic resin and a silicone resin, is also known (see patent reference 4).

However, when a polyfunctional epoxy resin is used as the matrix resin, the heat resistance is still not entirely satisfactory. When a polyamic acid oligomer is used, the melt viscosity is high, meaning the workability is poor. As a result, a solvent must be used to improve the workability, but this leads to concerns about the environmental impact. Furthermore, water is generated by condensation during the curing process, leading to a deterioration in the strength. Similarly, when a silicone with a comparatively low polymerization degree is cross-linked by polycondensation for use as the matrix resin, water or alcohol is generated by the condensation, leading to a deterioration in the strength. Furthermore, when a combination of an organic resin and a silicone resin is used, satisfactory strength cannot be obtained at high temperatures.
[Patent Reference 1] JP 2006-291095 A
[Patent Reference 2] US 2005/0014925 A1
[Patent Reference 3] US 2005/0165154 A1
[Patent Reference 4] WO 2004/076175 A1

### SUMMARY OF THE INVENTION

The present invention takes the above circumstances into consideration, and has an object of providing a liquid addition-curable silicone composition for a fiber-reinforced composite material which, when combined with a reinforcing fiber and cured, yields a composite material with excellent heat resistance and strength that can be used favorably for aircraft members, spacecraft members, artificial satellite members, automobile members and the like, as well as providing a fiber-reinforced silicone composite material obtained by curing the composition, and a method of producing the composite material.

As a result of intensive investigation aimed at achieving the above object, the inventors of the present invention discovered that a fiber-reinforced silicone composite material obtained by using a reinforcing fiber and a liquid addition-curable silicone composition as the matrix resin was able to achieve the object described above, and they were therefore able to complete the present invention.

In other words, a first aspect of the present invention provides a liquid addition-curable silicone composition for a fiber-reinforced composite material, comprising a component (a), a component (b), and a component (c) listed below.
Component (a): an organopolysiloxane in which the molar ratio of alkenyl groups relative to silicon atoms is within a range from 0.3 to 2.0.
Component (b): an organohydrogenpolysiloxane containing hydrogen atoms bonded to silicon atoms, in which the molar ratio of the hydrogen atoms relative to silicon atoms is within a range from 0.3 to 2.0.
Component (c): a platinum group metal-based catalyst.

A second aspect of the present invention provides a fiber-reinforced silicone composite material, comprising the above liquid addition-curable silicone composition as a matrix, and obtained by mixing the matrix with a reinforcing fiber and subsequently conducting curing.

A third aspect of the present invention provides a method of producing a fiber-reinforced silicone composite material, comprising the steps of: mixing the above liquid addition-curable silicone composition for a fiber-reinforced composite material with a reinforcing fiber, and curing the resulting mixture by heating.

The fiber-reinforced silicone composite material obtained using the production method of the present invention can use widely used, high-strength materials such as glass fiber or carbon fiber as the reinforcing fiber, and uses a general-purpose silicone material with superior heat resistance as the matrix, and as a result, the composite material exhibits excellent heat resistance and strength. Accordingly, the fiber-reinforced silicone composite material can be used favorably for aircraft members, spacecraft members, artificial satellite members, electrical and electronic device componentry, construction members and automobile members that are exposed to high temperatures. Moreover, by using the production method of the present invention, this type of fiber-reinforced silicone composite material can be produced without the wasteful consumption of resources.

### DETAILED DESCRIPTION OF THE PREFERRED EMBODIMENTS

A more detailed description of the present invention is provided below.

### [Composite Material]

In this description, the term "composite material" describes a material obtained by curing, via an addition reaction, a mixture of a liquid addition-curable silicone composition for a composite material and a reinforcing fiber. The liquid addition-curable silicone composition preferably represents from 10 to 95% by mass, and even more preferably 20 to 80% by mass, of the total mass of the composite material.

### [Reinforcing Fiber]

In this description, the term "reinforcing fiber" describes a fiber which, by complexing with the liquid addition-curable silicone composition for a fiber-reinforced silicone composite material, is able to improve the mechanical strength of a cured product of the silicone composition, and this reinforcing fiber functions as a base material for the above composite material. Conventional high-strength, heat-resistant fibers can be used as the reinforcing fiber. Examples include inorganic fibers such as glass fiber, carbon fiber and alumina fiber, and organic fibers such as aramid fiber, polyester fiber and aliphatic ketone fiber, and of these, glass fiber, carbon fiber, alumina fiber and aramid fiber are preferred. The fiber diameter of the reinforcing fiber is preferably within a range from 0.1 to 50 µm, and is even more preferably from 1 to 30 µm.

### [Addition-curable Silicone Composition]

The addition-curable silicone composition comprises the components (a), (b) and (c) described above.

### <Component (a)>

The organopolysiloxane of the component (a) is the base polymer for the addition-curable silicone composition, and the molar ratio of silicon atom-bonded alkenyl groups relative to silicon atoms is typically within a range from 0.3 to 2.0, is preferably at least 0.3 and less than 2.0, is even more preferably within a range from 0.5 to 1.5, and is most preferably within a range from 0.7 to 1.0. If this molar ratio is less than 0.3, then the composite material becomes rubber-like and the mechanical strength deteriorates, whereas if the molar ratio exceeds 2.0, production of the organopolysiloxane is difficult and its versatility is limited, making the organopolysiloxane economically unviable. Conventional organopolysiloxanes can be used as the component (a). The weight average molecular weight of the organopolysiloxane of the component (a), measured by gel permeation chromatography (hereafter abbreviated as GPC) and referenced against polystyrene standards, is preferably within a range from approximately 300 to 10,000. Furthermore, the viscosity at 25°C of the organopolysiloxane of the component (a) is preferably within a range from 1 to 10,000 mPa·s, and is even more preferably from approximately 10 to 3,000 mPa·s. Provided the viscosity is within this range, the siloxane penetrates easily into the spaces between fibers, and is also easy to handle. In terms of ease of availability of the raw materials, the organopolysiloxane of the component (a) has basically either a straight-chain structure with no branching, in which the molecular chain (the principal chain) comprises repeating diorganosiloxane units (R¹₂SiO_{2/2} units) and both of the molecular chain terminals are blocked with triorganosiloxy groups (R¹₃SiO_{1/2} units), or a cyclic structure with no branching, in which the molecular chain comprises repeating diorganosiloxane units, although the structure may also include some partial branched structures such as trifunctional siloxane units (R¹SiO_{3/2} units) and SiO_{4/2} units. (In the above formulas, R¹ represents identical or different, unsubstituted or substituted monovalent hydrocarbon groups of 1 to 10 carbon atoms, and preferably 1 to 8 carbon atoms.)

Examples of organopolysiloxanes that can be used as the component (a) include, for example, organopolysiloxanes that are represented by an average composition formula (1) shown below, and have a molar ratio of alkenyl groups relative to silicon atoms that is within a range from 0.3 to 2.0.

R¹ₐSiO_{(4-a)/2} (1)

(wherein, R¹ is as defined above, and a is preferably a number within a range from 1.5 to 2.8, more preferably from 1.8 to 2.5, and even more preferably from 1.95 to 2.05)

Examples of the monovalent hydrocarbon group represented by R¹ include alkyl groups such as a methyl group, ethyl group, propyl group, isopropyl group, butyl group, isobutyl group, tert-butyl group, pentyl group, neopentyl group, hexyl group, octyl group, nonyl group or decyl group; aryl groups such as a phenyl group, tolyl group, xylyl group or naphthyl group; cycloalkyl groups such as a cyclopentyl group or cyclohexyl group; alkenyl groups such as a vinyl group, allyl group, propenyl group, isopropenyl group, butenyl group, hexenyl group or octenyl group; cycloalkenyl groups such as a cyclohexenyl group; and groups in which either a portion of or all of the hydrogen atoms within the above hydrocarbon groups have been substituted with a halogen atom such as a fluorine atom, bromine tom or chlorine atom, or with a cyano group or the like, such as a chloromethyl group, chloropropyl group, bromoethyl group, trifluoropropyl group or cyanoethyl group.

In the formula (1), at least two of the R¹ groups bonded to silicon atoms within each molecule are alkenyl groups (and preferably alkenyl groups of 2 to 8 carbon atoms, and even more preferably 2 to 6 carbon atoms). The alkenyl group content, reported as a molar ratio relative to the silicon atoms, is typically within a range from 0.3 to 2.0, is preferably at least 0.3 and less than 2.0, is even more preferably within a range from 0.5 to 1.5, and is most preferably within a range from 0.7 to 1.0. In those cases where the organopolysiloxane of the component (a) has a straight-chain structure, the alkenyl groups may be bonded solely to silicon atoms at the molecular chain terminals, solely to silicon atoms at non-terminal positions, or may also be bonded to both these types of silicon atoms. However, in terms of achieving a favorable curing rate and superior properties for the cured product, at least one alkenyl group is preferably bonded to a silicon atom at a molecular chain terminal. If the molar ratio of alkenyl groups relative to silicon atoms is less than 0.3, then the cured product does not attain satisfactory strength, whereas if the molar ratio exceeds 2.0, the component becomes uneconomic, and is also difficult to produce.

Basically, the R¹ groups may be any of the groups listed above, but the alkenyl groups are preferably vinyl groups, and the monovalent hydrocarbon groups other than the alkenyl groups are preferably methyl groups or phenyl groups.

Specific examples of the component (a) include the compounds represented by the general formulas shown below.

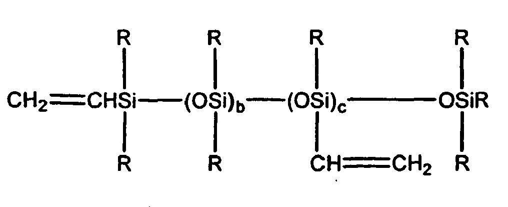

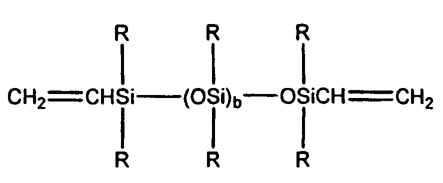

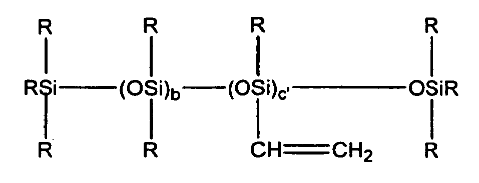

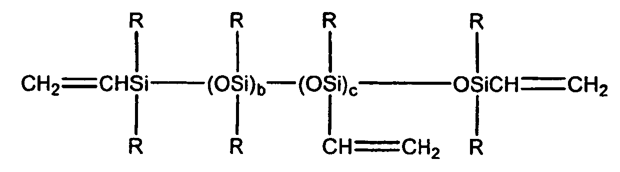

In the above general formulas, R has the same meaning as R¹ with the exception of not including alkenyl groups. b is an integer that satisfies b ≥ 0, c is an integer that satisfies c ≥ 1, and c' is an integer that satisfies c' ≥ 2, provided that b+c and b+c' are numbers that yield a molecular weight and a viscosity for the organopolysiloxane that fall within the ranges specified above (namely, from 300 to 10,000 and from 1 to 10,000 mPa·s, preferably from 10 to 3,000 mPa·s, respectively).

### <Component (b)>

The organohydrogenpolysiloxane of the component (b) comprises sufficient hydrogen atoms that the molar ratio of silicon atom-bonded hydrogen atoms (namely, SiH groups) relative to silicon atoms is typically within a range from 0.3 to 2.0, is preferably at least 0.3 and less than 2.0, is more preferably within a range from 0.5 to 1.5, and is even more preferably within a range from 0.7 to 1.0. If this molar ratio is less than 0.3, then the composite material becomes rubber-like and the mechanical strength deteriorates, whereas if the molar ratio exceeds 2.0, production of the organohydrogenpolysiloxane is difficult and its versatility is limited, making the organohydrogenpolysiloxane economically unviable. The component (b) reacts with the component (a), and functions as a cross-linking agent. There are no particular restrictions on the molecular structure of the component (b), and conventionally produced chain-like, cyclic, branched, or three dimensional network (resin-like) organohydrogenpolysiloxanes can be used as the component (b). If the component (b) has a chain-like structure, then the SiH groups may be bonded solely to silicon atoms at the molecular chain terminals, solely to silicon atoms at non-terminal positions, or may also be bonded to both these types of silicon atoms. Furthermore, the number of silicon atoms within each molecule (namely, the polymerization degree) is typically within a range from 2 to 300, and is preferably from 4 to 150, and an organohydrogenpolysiloxane that is liquid at room temperature (25°C) is particularly favorable as the component (b).

Examples of the component (b) include organohydrogenpolysiloxanes represented by an average composition formula (2) shown below.

R²_{d}HₑSiO_{(4-d-e)/2} (2)

(wherein, R² represents identical or different, unsubstituted or substituted monovalent hydrocarbon groups that preferably contain from 1 to 10, and more preferably from 1 to 8 carbon atoms, d and e represent numbers that preferably satisfy 0.7 ≤ d ≤ 2.1, 0.001 ≤ e ≤ 1.0 and 0.8 ≤ d+e ≤ 3.0, and more preferably satisfy 1.0 ≤ d ≤ 2.0, 0.01 ≤ e ≤ 1.0 and 1.5 ≤ d+e ≤ 2.5)

Examples of R² include the same groups as those described above for R¹ within the above average composition formula (1) (but excluding alkenyl groups).

Specific examples of the organohydrogenpolysiloxanes represented by the above average composition formula (2) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, cyclic copolymers of methylhydrogensiloxane and dimethylsiloxane, methylhydrogenpolysiloxane with both terminals blocked with trimethylsiloxy groups, copolymers of methylhydrogensiloxane and dimethylsiloxane with both terminals blocked with trimethylsiloxy groups, dimethylpolysiloxane with both terminals blocked with dimethylhydrogensiloxy groups, copolymers of methylhydrogensiloxane and dimethylsiloxane with both terminals blocked with dimethylhydrogensiloxy groups, copolymers of methylhydrogensiloxane and diphenylsiloxane with both terminals blocked with trimethylsiloxy groups, copolymers of methylhydrogensiloxane, diphenylsiloxane and dimethylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, diphenylsiloxane and dimethylsiloxane with both terminals blocked with dimethylhydrogensiloxy groups, copolymers of methylhydrogensiloxane, methylphenylsiloxane and dimethylsiloxane with both terminals blocked with dimethylhydrogensiloxy groups, copolymers comprising (CH₃)₂HSiO_{1/2} units, (CH₃)₂SiO_{2/2} units, and SiO_{4/2} units, copolymers comprising (CH₃)₂HSiO_{1/2} units and SiO_{4/2} units, and copolymers comprising (CH₃)₂HSiO_{1/2} units, SiO_{4/2} units, and (C₆H₅)₃SiO_{1/2} units.

The quantity added of the component (b) must be sufficient that the quantity of SiH groups within this component (b), relative to each 1 mol of alkenyl groups within the entire curable silicone composition, and in particular, relative to each 1 mol of alkenyl groups bonded to silicon atoms within the entire curable silicone composition, and especially relative to each 1 mol of alkenyl groups bonded to silicon atoms within the component (a), is within a range from 0.1 to 5.0 mols, preferably from 0.5 to 3.0 mols, and more preferably from 0.8 to 2.0 mols. The ratio of the alkenyl groups bonded to silicon atoms within the component (a) relative to the total number of alkenyl groups within the entire curable silicone composition is preferably within a range from 80 to 100 mol%, and is more preferably from 90 to 100 mol%. In those cases where the component (a) is the only component that contains alkenyl groups within the entire curable silicone composition, the quantity added of the component (b) should be sufficient that the number of SiH groups within the component (b) per 1 mol of alkenyl groups within the component (a) is within a range from 0.1 to 5.0 mols, preferably from 0.5 to 3.0 mols, and more preferably from 0.8 to 2.0 mols. If the quantity added of the component (b) yields a quantity of SiH groups within the above range, then the curing of the addition-curable silicone composition is more likely to proceed satisfactorily. Furthermore, foaming problems caused by a dehydrogenation reaction within the cured product of the silicone composition are less likely, meaning superior levels of strength and heat resistance tend to be achieved for the resulting fiber-reinforced silicone composite material.

### <Component (c)>

The platinum group metal-based catalyst of the component (c) is used for accelerating the addition curing reaction (the hydrosilylation reaction) between the component (a) and the component (b). Conventional platinum group metal-based catalysts can be used as the component (c), although the use of platinum or a platinum compound is preferred. Specific examples of the component (c) include platinum black, platinic chloride, chloroplatinic acid, alcohol-modified products of chloroplatinic acid, complexes of chloroplatinic acid with olefins, aldehydes, vinylsiloxanes or acetylene alcohols, and complexes of platinum and vinylsiloxanes, although other conventional platinum group metal-based catalysts that are used for addition curing reactions (hydrosilylation reactions) can also be used.

The quantity added of the component (c) need only be an effective catalytic quantity, may be suitably increased or decreased in accordance with the desired curing rate, and preferably yields a mass of the platinum group metal relative to the mass of the component (a) that falls within a range from 0.1 to 1,000 ppm, and more preferably from 1 to 200 ppm.

### <Inorganic Fillers>

An inorganic filler may also be added to the addition-curable silicone composition in order to strengthen the matrix portion. From the viewpoint of practical application, this inorganic filler is preferably an inorganic filler with a low specific gravity. Examples of the inorganic filler include silica, alumina, zirconia, silicon nitride, aluminum, titanium oxide, carbon black and boron nitride, and of these, silica, alumina and carbon black are preferred. In those cases where an inorganic filler is added, the blend quantity is preferably sufficient that after addition of the filler, the filler accounts for 1 to 60% by volume, and more preferably 1 to 50% by volume, of the entire silicone composition.

### [Method of Producing Fiber-reinforced Silicone Composite Material]

Heating the fiber-reinforced silicone composite composition comprising the reinforcing fiber and the addition-curable silicone composition causes a hydrosilylation reaction to proceed within the composite composition, thereby curing the composite composition. Because the curing rate is dependent on the blend quantity of the addition-curable silicone composition within the composite composition, the temperature conditions during curing can be selected appropriately in accordance with this blend quantity of the addition-curable silicone composition, although the temperature is preferably within a range from 80 to 300°C, and is more preferably from 100 to 200°C. The curing time is preferably within a range from 1 minute to 3 hours, and is more preferably from 3 minutes to 2 hours. Furthermore, secondary curing may also be conducted if required, and the temperature conditions during such secondary curing are preferably at least 120°C, and more preferably within a range from 150 to 250°C. The secondary curing time is preferably within a range from 10 minutes to 48 hours, and is more preferably from 30 minutes to 24 hours.

### EXAMPLES

A more detailed description of the present invention is presented below using a series of examples, although the present invention is in no way limited by these examples.

### [Example 1]

Compounds (A) and (B) shown below were used as the silicone components, and a compound (C) shown below was used as the platinum group metal-based catalyst. (A) 55% by mass of a diorganopolysiloxane containing alkenyl groups within each molecule, represented by the formula shown below: 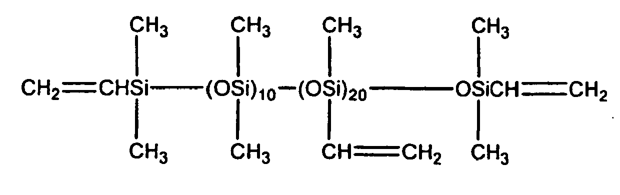 (molar ratio of alkenyl groups relative to silicon atoms: 0.6875),
(B) 45% by mass of a diorganopolysiloxane containing hydrogen atoms bonded to silicon atoms, represented by the formula shown below: 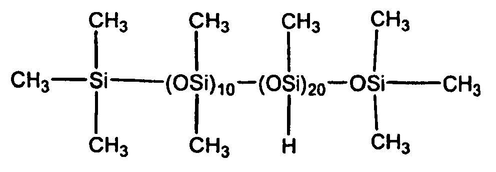 (molar ratio of SiH groups relative to silicon atoms: 0.625),
(C) 0.15% by mass, relative to the combined quantity of polysiloxanes, of a toluene solution of a complex of platinum and divinyltetramethyldisiloxane (platinum element content: 0.5% by mass, a hydrosilylation catalyst).

The above components (A) and (B) were combined in a planetary mixer (a registered trademark for a mixing device manufactured by Inoue Manufacturing Co., Ltd.), and were stirred for one hour at room temperature. Subsequently, the component (C) was added to the planetary mixer and stirring was continued for a further 30 minutes, thus yielding a curable silicone composition.

11 sheets of a carbon fiber cloth (Torayca C06644B (a product name) manufactured by Toray Industries, Inc.) that had been cut to dimensions of 130 mm × 190 mm (combined weight: 75 g) were placed in a screen mask of thickness 4 mm with an opening of 130 mm × 190 mm, and 75 g of the composition prepared above was poured onto the cloth. Heating was then conducted in the air for one hour at 125°C, yielding a fiber-reinforced silicone composite material with dimensions of 130 mm × 190 mm and a thickness of 4 mm. Measurement of the flexural modulus at 260°C using an autoclave (AGS-5kNG (a product name), manufactured by Shimadzu Corporation) revealed a value of 17,000 MPa.

### [Example 2]

With the exception of replacing the carbon fiber cloth with a glass cloth (woven cloth H 340F 107 (a product name), manufactured by Unitika Ltd.) (total weight: 75 g), a fiber-reinforced silicone composite material with dimensions of 130 mm x 190 mm and a thickness of 4 mm was prepared in the same manner as the example 1.
Measurement of the flexural modulus at 260°C using an autoclave revealed a value of 5,000 MPa.

### [Example 3]

With the exceptions of combining, within the planetary mixer, the component (A) and component (B) from the example 1, and a quantity of a silica (MIN-U-SIL 5 (a product name), manufactured by US Silica Company) equivalent to 20% by volume relative to the combined total of the polysiloxane components, subsequently mixing for one hour at room temperature, and then adding the component (C) from the example 1 and mixing for a further 30 minutes at room temperature to form a curable silicone composition, a fiber-reinforced silicone composite material with dimensions of 130 mm × 190 mm and a thickness of 4 mm was prepared in the same manner as the example 1. Measurement of the flexural modulus at 260°C using an autoclave revealed a value of 20,000 MPa.

### [Comparative Example 1]

With the exceptions of replacing the component (A) from the example 1 with the component (A-1) shown below, and replacing the component (B) from the example 1 with the component (B-1) shown below, a fiber-reinforced silicone composite material with dimensions of 130 mm × 190 mm and a thickness of 4 mm was prepared in the same manner as the example 1. An attempt was made to measure the flexural modulus at 260°C using an autoclave, but because the fiber-reinforced silicone composite material was rubber-like, the measurement could not be conducted.

### (A-1) 95% by mass of a diorganopolysiloxane containing two alkenyl groups within each molecule, represented by the formula shown below:

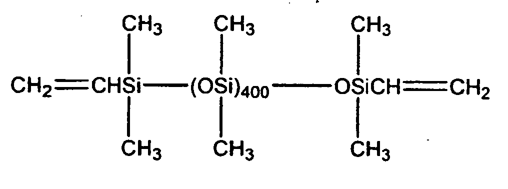

(molar ratio of alkenyl groups relative to silicon atoms: 0.0050)

### (B-1) 5% by mass of a diorganopolysiloxane containing hydrogen atoms bonded to silicon atoms, represented by the formula shown below:

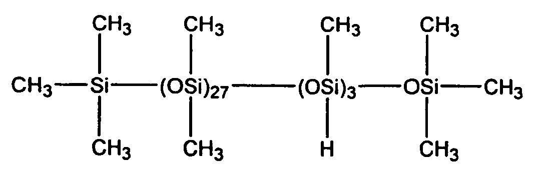

(molar ratio of SiH groups relative to silicon atoms: 0.094).

## Claims

1. A liquid addition-curable silicone composition for a fiber-reinforced composite material, the silicone composition comprising a component (a), a component (b) and a component (c) listed below:
(a) an organopolysiloxane in which a molar ratio of alkenyl groups relative to silicon atoms is within a range from 0.3 to 2.0,
(b) an organohydrogenpolysiloxane containing hydrogen atoms bonded to silicon atoms, in which a molar ratio of the hydrogen atoms relative to silicon atoms is within a range from 0.3 to 2.0, and
(c) a platinum group metal-based catalyst.

2. The liquid addition-curable silicone composition for a fiber-reinforced composite material according to claim 1, further comprising an inorganic filler in sufficient quantity that the inorganic filler represents from 1 to 60% by volume of the silicone composition.

3. A fiber-reinforced silicone composite material, comprising the liquid addition-curable silicone composition for a fiber-reinforced composite material defined in claim 1 or 2 as a matrix, and obtained by mixing the matrix with a reinforcing fiber and subsequently conducting curing.

4. The fiber-reinforced silicone composite material according to claim 3, wherein the reinforcing fiber is a carbon fiber.

5. The fiber-reinforced silicone composite material according to claim 3, wherein the reinforcing fiber is a glass fiber.

6. The fiber-reinforced silicone composite material according to claim 3, wherein the reinforcing fiber is an aramid fiber.

7. The fiber-reinforced silicone composite material according to claim 3, wherein the reinforcing fiber is an alumina fiber.

8. A method of producing a fiber-reinforced silicone composite material, comprising the steps of: mixing the liquid addition-curable silicone composition for a fiber-reinforced composite material defined in claim 1 or 2 with a reinforcing fiber, and curing a resulting mixture by heating.

9. The method according to claim 8, wherein the reinforcing fiber is a carbon fiber.

10. The method according to claim 8, wherein the reinforcing fiber is a glass fiber.

## Patentansprüche

1. Flüssige additionshärtbare Silikonzusammensetzung für ein Faser-verstärktes Compositmaterial, wobei die Silikonzusammensetzung eine Komponente (a), eine Komponente (b) und eine Komponente (c), wie nachstehend angeführt, umfaßt:
(a) ein Organopolysiloxan, in welchem ein molares Verhältnis der Alkenylgruppen, relativ zu den Siliziumatomen, innerhalb eines Bereichs von 0,3 bis 2,0 beträgt,
(b) ein Organohydrogenpolysiloxan, enthaltend Wasserstoffatome, gebunden an Siliziumatome, in welchem ein molares Verhältnis der Wasserstoffatome, relativ zu den Siliziumatomen, innerhalb eines Bereichs von 0,3 bis 2,0 beträgt, und
(c) ein auf Metall-basierender Katalysator der Platingruppe.

2. Flüssige additionshärtbare Silikonzusammensetzung für ein Faser-verstärktes Compositmaterial gemäß Anspruch 1, weiter umfassend ein anorganisches Füllmittel in einer ausreichenden Menge, das das anorganische Füllmittel von 1 bis 60 Vol.-% der Silikonzusammensetzung darstellt.

3. Faser-verstärktes Silikonkompositmaterial, umfassend die flüssige additionshärtbare Silikonzusammensetzung für ein Faser-verstärktes Kompositmaterial, wie in Anspruch 1 oder 2 definiert, als eine Matrix und Erhalten durch Mischen der Matrix mit einer Verstärkungsfaser und nachträgliches Durchführen des Härtens.

4. Faser-verstärktes Silikonkompositmaterial gemäß Anspruch 3, wobei die Verstärkungsfaser eine Carbonfaser ist.

5. Faser-verstärktes Silikonkompositmaterial gemäß Anspruch 3, wobei die Verstärkungsfaser eine Glasfaser ist.

6. Faser-verstärktes Silikonkompositmaterial gemäß Anspruch 3, wobei die Verstärkungsfaser eine Aramidfaser ist.

7. Faser-verstärktes Silikonkompositmaterial gemäß Anspruch 3, wobei die Verstärkungsfaser eine Aluminiumoxidfaser ist.

8. Verfahren zum Herstellen eines Faser-verstärkten Silikonkompositmaterials, umfassend die Schritte: des Mischens der flüssigen additionshärtbaren Silikonzusammensetzung für ein Faser-verstärktes Kompositmaterial, wie in Anspruch 1 oder 2 definiert, mit einer Verstärkungsfaser und des Härtens eines resultierenden Gemisches durch Erwärmen.

9. Verfahren gemäß Anspruch 8, wobei die Verstärkungsfaser eine Carbonfaser ist.

10. Verfahren gemäß Anspruch 8, wobei die Verstärkungsfaser eine Glasfaser ist.

## Revendications

1. Composition liquide de silicone durcissable par addition pour un matériau composite renforcé par des fibres, la composition de silicone comprenant un composant (a), un composant (b) et un composant (c) présentés ci-dessous :
(a) un organopolysiloxane dans lequel le rapport en moles des groupes alcényle aux atomes de silicium est compris dans une plage de 0,3 à 2,0,
(b) un organohydrogénopolysiloxane contenant des atomes d'hydrogène liés à des atomes de silicium, dans lequel le rapport en moles des atomes d'hydrogène aux atomes de silicium est compris dans une plage de 0,3 à 2,0, et
(c) un catalyseur à base d'un métal du groupe du platine.

2. Composition liquide de silicone durcissable par addition pour un matériau composite renforcé par des fibres selon la revendication 1, qui comprend en outre une charge inorganique en une quantité suffisante pour que la charge inorganique représente 1 à 60 % en volume de la composition de silicone.

3. Matériau composite de silicone renforcé par des fibres, comprenant en tant que matrice la composition liquide de silicone durcissable par addition pour un matériau composite renforcé par des fibres définie dans la revendication 1 ou 2, et obtenu par mélange de la matrice avec une fibre de renfort, puis mise en oeuvre d'un durcissement.

4. Matériau composite de silicone renforcé par des fibres selon la revendication 3, dans lequel la fibre de renfort est une fibre de carbone.

5. Matériau composite de silicone renforcé par des fibres selon la revendication 3, dans lequel la fibre de renfort est une fibre de verre.

6. Matériau composite de silicone renforcé par des fibres selon la revendication 3, dans lequel la fibre de renfort est une fibre d'aramide.

7. Matériau composite de silicone renforcé par des fibres selon la revendication 3, dans lequel la fibre de renfort est une fibre d'alumine.

8. Procédé de production d'un matériau composite de silicone renforcé par des fibres, comprenant les étapes de mélange de la composition liquide de silicone durcissable par addition pour un matériau composite renforcé par des fibres définie dans la revendication 1 ou 2 à une fibre de renfort, et de durcissement, par chauffage, du mélange obtenu.

9. Procédé selon la revendication 8, dans lequel la fibre de renfort est une fibre de carbone.

10. Procédé selon la revendication 8, dans lequel la fibre de renfort est une fibre de verre.
